# EUROPÄISCHE PATENTANMELDUNG

(11) **EP 3 299 595 A1**
(43) Veröffentlichungstag der Anmeldung: **28.03.2018**
(21) Anmeldenummer: 16190025.3
(22) Anmeldetag: 22.09.2016
(51) Int. Cl.: F01L 1/352, H02P 6/18

(54) **NOCKENWELLENVERSTELLER**

(71) Anmelder: Schaeffler Technologies AG & Co. KG, 91074 Herzogenaurach (DE)
(72) Erfinder: KARBACHER, Christian, 91074 Herzogenaurach (DE); SOLFRANK, Peter, 96158 Frensdorf (DE)

(57) **Zusammenfassung**

Ein Nockenwellenversteller umfasst einen Elektromotor (2) und ein mit diesem zusammenwirkendes Getriebe (11), wobei eine Verstellwelle (6) des Getriebes (11) mit dem Rotor (8) des Elektromotors (2) gekoppelt ist. Eine Abtriebswelle (3) des Getriebes (11) ist mit der zu verstellenden Nockenwelle (5) gekoppelt. Zur Ansteuerung des Elektromotors (2) ist eine außerhalb eines den Stator (9) des Elektromotors (2) umschließenden Gehäuses (10) des Elektromotors (2) angeordnete, sensorlose Ansteuereinheit (12) vorgesehen.

## Beschreibung

Die Erfindung betrifft einen für die Verwendung in einem Verbrennungsmotor geeigneten Nockenwellenversteller, welcher einen Elektromotor und ein mit diesem zusammenwirkendes Getriebe umfasst, wobei das Getriebe eine mit dem Rotor des Elektromotors gekoppelte Verstellwelle sowie eine zur Kopplung mit einer Nockenwelle vorgesehene Abtriebswelle aufweist.

Derartige Nockenwellenversteller sind zum Beispiel aus der DE 10 2004 009 128 A1 sowie aus der DE 10 2013 220 220 A1 bekannt. Diese Nockenwellenversteller arbeiten jeweils mit einem Wellgetriebe als Stellgetriebe.

Ein weiterer Nockenwellenversteller ist beispielsweise aus der US 2007/0101956 A1 bekannt. Es handelt sich hierbei um einen elektromechanischen Nockenwellenversteller mit einem BLDC-Motor, das heißt einem elektronisch kommutierenden Motor. Hierbei werden Kommutierungssignale gleichzeitig zur Bestimmung der Drehwinkellage der Nockenwelle genutzt.

Der Erfindung liegt die Aufgabe zugrunde, einen elektrischen Nockenwellenversteller gegenüber dem genannten Stand der Technik hinsichtlich eines besonders kompakten, montagefreundlichen und beanspruchungsgerechten Aufbaus weiterzuentwickeln.

Diese Aufgabe wird erfindungsgemäß gelöst durch einen elektrischen Nockenwellenversteller mit den Merkmalen des Anspruchs 1 sowie durch ein Verfahren zum Betrieb eines zur Variation des Phasenverhältnisses zwischen Kurbelwelle und Nockenwelle eines Verbrennungsmotors vorgesehenen Nockenwellenverstellers gemäß Anspruch 9. Die im Folgenden in Zusammenhang mit dem Betriebsverfahren erläuterten Ausgestaltungen und Vorteile der Erfindung gelten sinngemäß auch für die Vorrichtung, das heißt dem Nockenwellenversteller, und umgekehrt.

Der in an sich bekanntem Grundaufbau einen Elektromotor und ein durch diesen betätigtes Getriebe umfassende Nockenwellenversteller weist eine Ansteuereinheit auf, welche zur sensorlosen Ansteuerung des Elektromotors ausgebildet ist. Bei der Ansteuereinheit handelt es sich nicht notwendigerweise um eine einzige bauliche Einheit. Der Begriff "sensorlos" bezieht sich im vorliegenden Zusammenhang auf die Erfassung der Rotorposition des Elektromotors. Durch den Wegfall jeglichen Sensors, welcher die Rotorlage und/oder Rotation des Rotors des Elektromotors detektiert, entfallen geometrische Beschränkungen, welche durch das Vorhandensein eines Sensors oder mehrerer Sensoren gegeben wären. Die Ansteuereinheit des Nockenwellenverstellers ist außerhalb eines nicht notwendigerweise geschlossenen, den Stator des Elektromotors umschließenden Gehäuses des Elektromotors angeordnet. Auch ein Bauteil, welches die Aufgabe hat, Statorelemente des Elektromotors zu halten, ist in diesem Sinne als Gehäuse des Elektromotors zu verstehen. Die Anordnung der Ansteuereinheit außerhalb des genannten Gehäuses hat sowohl Vorteile hinsichtlich der Bauraumausnutzung als auch hinsichtlich der thermischen Beanspruchung und Kühlung von Bauteilen. Optional sind der Stator und der Rotor des Elektromotors sowie die Ansteuereinheit von einem weiteren, gemeinsamen, äußeren Gehäuse umschlossen. Aufgrund der sensorlosen Ansteuerung des Elektromotors ist hinsichtlich der Formgebung eines solchen äußeren Gehäuses ein großer konstruktiver Gestaltungsspielraum gegeben.

Hinsichtlich der sensorlosen, das heißt elektronischen Kommutierung eines Elektromotors wird beispielhaft auf die Dokumente DE 10 2005 002 327 A1, DE 10 2008 058 955 A1, sowie DE 100 63 054 A1 hingewiesen.

In hinsichtlich der Wärmeabteilung besonders vorteilhafter Ausgestaltung ist die Mittelachse des Elektromotors des Nockenwellenverstellers gegenüber der Ansteuereinheit versetzt, wobei die Ansteuereinheit mittels einer eine Kühlfläche bildenden Montageplatte mit dem Elektromotor mechanisch verbunden ist. Als Montageplatte gilt in diesem Zusammenhang auch ein nicht vollständig flächiges Bauteil, welches eine mechanische Verbindung zwischen dem Elektromotor und der Ansteuereinheit herstellt. Die Ansteuereinheit umfasst zwar keine Positionssensorik, jedoch vorzugsweise Spannungssensoren und Stromsensoren, welche beim Betrieb der Ansteuereinheit in zwei verschiedenen Betriebsmodi zum Einsatz kommen.

Die Betriebsmodi sind drehzahlabhängig, bezogen auf die Drehzahl des Elektromotors, wählbar. Beim Betriebsmodus in einem unteren Drehzahlenbereich handelt es sich um einen Stromimpuls-basierten Modus und beim Betriebsmodus in einem oberen Drehzahlenbereich um einen gegenspannungsbasierten Modus. Der letztgenannte Modus wird auch als BEMF-Modus (back electro-magnetic force) bezeichnet.

Das impulsbasierte Verfahren ist bei Stillstand des Elektromotors folgendermaßen nutzbar: Es werden kurze Stromimpulse (beispielsweise mit einer Dauer von jeweils weniger als einer ms) gesendet, die den Rotor des Elektromotors nicht bewegen, jedoch durch das magnetische Feld des Rotors beeinflusst werden. Die Beeinflussung ist winkelabhängig, so dass durch das Antwortsignal auf die Winkelstellung des Rotors bereits bei Motorstillstand geschlossen werden kann. Somit ist auch bei dem im unteren Drehzahlbereich und bei Stillstand des Elektromotors gegebenen, impulsbasierten Ansteuermodus des Elektromotors kein "blinder" Betrieb des Elektromotors und damit keine Vergleichbarkeit mit dem Betriebsmodus eines Schrittmotors gegeben.

Prinzipiell ist die Ansteuerung eines Elektromotors mit einem impulsbasierten Verfahren im unteren Drehzahlbereich sowie bei Stillstand des Elektromotors und mit einem Verfahren, welches eine induzierte elektromagnetische Kraft nutzt, im oberen Drehzahlbereich beispielsweise in folgender Publikation beschrieben:
M. Schrödl, E. Robeischl: Sensorlose Drehzahl- und Lageregelung von Permanentmagnet-Synchronmaschinen auf Basis des INFORM-Verfahrens; e&i Elektrotechnik und Informationstechnik, Februar 2000, Volume 117, Issue 2, pp 103 - 112
(online veröffentlicht bei Springer Link)

Die Abkürzung INFORM steht hierbei für INdirekte Flussermittlung durch Online-Reaktanz-Messung.

Zum technischen Hintergrund wird in diesem Zusammenhang auch auf die Dokumente DE 20 2013 218 041 A1 sowie DE 10 2012 223 847 A1 verwiesen. Soweit die Ansteuereinheit Winkelinformationen liefernde Signale von Sensoren verarbeitet, sind die entsprechenden Sensoren nicht dem Nockenwellenversteller zuzurechnen. Die genannten Winkelinformationen, das heißt Informationen bezüglich der Winkelstellung und/oder Rotation, sind vorzugsweise in einem ersten Fall der Nockenwelle und im anderen Fall der Kurbelwelle zugeordnet. Die zur Erfassung der Winkelinformationen vorhandenen Sensoren sind vorzugsweise an derjenigen Seite der Nockenwelle beziehungsweise der Kurbelwelle angeordnet, welche dem Nockenwellenversteller sowie dem Getriebe, insbesondere Umschlingungsgetriebe, welches ein Drehmoment von der Kurbelwelle auf die Nockenwelle überträgt, abgewandt ist.

Bei dem Elektromotor des Nockenwellenverstellers handelt es sich beispielsweise um einen dreiphasigen elektronisch kommutierten Motor. Ebenso kann es sich bei dem Elektromotor um einen Synchron-Reluktanzmotor handeln.

Das Getriebe des Nockenwellenverstellers ist vorzugsweise als Dreiwellengetriebe, insbesondere als Wellgetriebe, ausgebildet. Bei der Antriebswelle dieses Getriebe handelt es sich um ein gehäusefestes Getriebeteil, so dass das nicht notwendigerweise geschlossene Gehäuse des Getriebes beim Betrieb des Nockenwellenverstellers als Ganzes rotiert.

Mit dem Nockenwellenversteller ist folgendes Betriebsverfahren realisierbar:
- Bei Stillstand des Verbrennungsmotors wird die Winkelrelation zwischen Stator und Rotor des Elektromotors durch Bestromung des Stators mit Stromimpulsen, das heißt Testimpulsen, und Auswertung der Antwortsignale bestimmt,
- bis zu einer Drehzahlgrenze des Elektromotors wird die Winkellage dessen Rotors stromimpulsbasiert erfasst,
- die Kommutierung des Elektromotors wird mit Überschreiten der Drehzahlgrenze auf einen gegenspannungsbasierten Modus (BEMF-Modus) umgestellt.

Die genannte Drehzahlgrenze ist in vorteilhafter Verfahrensführung veränderlich. Insbesondere kann bei der Umschaltung zwischen dem impulsbasierten Verfahren und dem BEMF-Modus in unterschiedliche Richtungen eine Hysterese gegeben sein.

Der Vorteil der Erfindung liegt insbesondere darin, dass durch die sensorlose Kommutierung eines bürstenlosen DC-Motors in einem elektromechanischen Nockenwellenversteller konstruktive Freiheiten gewonnen werden, was die Anordnung der Leistungselektronik des Elektromotors betrifft. Damit ist eine thermisch optimierte Unterbringung der Leistungselektronik bei zugleich kompaktem Aufbau realisierbar.

Nachfolgend wird ein Ausführungsbeispiel der Erfindung anhand einer Zeichnung näher erläutert. Hierin zeigen:
- Fig. 1: einen elektrischen Nockenwellenversteller in schematischer Ansicht,
- Fig. 2: Details des Nockenwellenverstellers nach Fig. 1 sowie damit zusammenwirkender Komponenten eines Verbrennungsmotors.

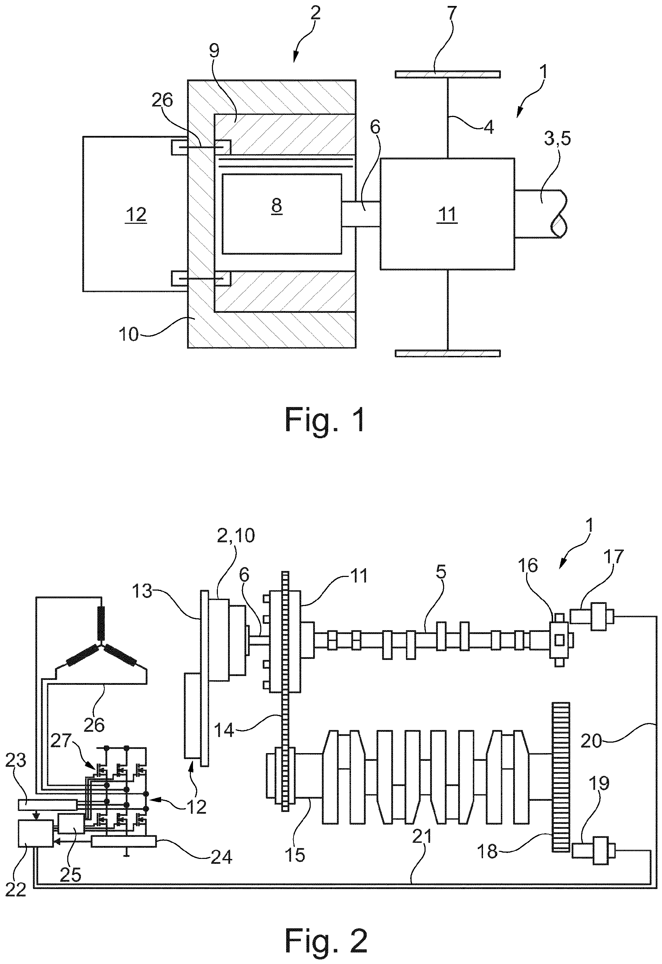

Ein insgesamt mit dem Bezugszeichen 1 gekennzeichneter elektrischer Nockenwellenversteller ist zum Einbau in eine in Figur 2 ansatzweise dargestellte Brennkraftmaschine vorgesehen. Hinsichtlich der grundsätzlichen Funktion des Nockenwellenverstellers 1 wird auf den eingangs zitierten Stand der Technik verwiesen.

Der Nockenwellenversteller 1 weist einen Elektromotor 2 auf, dessen Gehäuse mit 10 und dessen Stator mit 9 bezeichnet ist. Der mit 8 bezeichnete Rotor des Elektromotors 2 ist über eine Verstellwelle 6 mit einem Getriebe 11 gekoppelt. Bei dem Getriebe 11 handelt es sich um ein Dreiwellengetriebe, nämlich Wellgetriebe. Die Verstellwelle 6 kann mit der Motorwelle des Elektromotors 2 identisch oder drehfest gekoppelt sein. Im letztgenannten Fall kann zwischen das Getriebe 11 und den Elektromotor 2 eine Ausgleichskupplung, insbesondere Oldham-Kupplung, geschaltet sein.

Auf der Ausgangsseite des Getriebes 11 ist eine Abtriebswelle 3 mit einer Nockenwelle 5 der Brennkraftmaschine identisch oder fest verbunden. Eine Antriebswelle des Getriebes 11 ist mit 4 bezeichnet und fest mit einem Antriebsrad 7, nämlich einer Riemenscheibe oder einem Kettenblatt, verbunden. Insgesamt handelt es sich bei der Antriebswelle 4 um ein gehäusefestes Teil des Getriebes 11. Die Antriebswelle 4 ist über ein in Fig. 2 erkennbares Zugmittel 14 von der mit 15 bezeichneten Kurbelwelle der Brennkraftmaschine, das heißt des Hubkolbenmotors, nämlich Vierzylinder-Reihenmotors, angetrieben. Ebenso kann der Nockenwellenversteller 1 bei Verbrennungsmotoren anderer Bauart zum Einsatz kommen.

Solange die Verstellwelle 6 mit der Drehzahl der Nockenwelle 5, das heißt mit halber Kurbelwellendrehzahl, rotiert, wird die Phasenrelation zwischen der Nockenwelle 5 und der Kurbelwelle 15 nicht verstellt. Erst bei einer Drehzahldifferenz zwischen der Nockenwelle 5 und der Verstellwelle 6 bewirkt das Getriebe 11 als hochuntersetztes Stellgetriebe eine Verstellung der Phasenrelation zwischen der Nockenwelle 5 und der Kurbelwelle 15.

Der Elektromotor 2 wird betrieben mit Hilfe einer Ansteuereinheit 12, welche an den Elektromotor 2 außermittig angeflanscht ist. Hierbei verbindet eine Montageplatte 13 das Gehäuse 10 des Elektromotors 2 mit der Ansteuereinheit 12. In Fig. 2 skizzierte elektronische Komponenten der Ansteuereinheit 12 befinden sich - abweichend von der schematisierten Darstellung - tatsächlich im Gehäuse der Ansteuereinheit 12 auf der Montageplatte 13. Die Montageplatte 13 stellt hierbei nicht nur die mechanische Verbindung zwischen dem Elektromotor 2 und der Ansteuereinheit 12 her, sondern fungiert zugleich als Wärmeleitungs- und Kühlfläche. Durch die asymmetrische Anordnung der Ansteuereinheit 12 relativ zum Elektromotor 2 ist eine gute Wärmeabfuhr aus dem Elektromotor 2, verbunden mit einer niedrigen thermischen Belastung der Ansteuereinheit 12, gegeben.

Der Nockenwellenversteller 1 befindet sich zusammen mit dem Zugmittel 14 an einer ersten Stirnseite der Nockenwelle 5 sowie der Kurbelwelle 15. Auf der gegenüberliegenden Stirnseite der Nockenwelle 5 sowie der Kurbelwelle 15 befinden sich verschiedene, jeweils Winkelinformationen liefernde Sensoren 17, 19. Hierbei handelt es sich um einen Sensor 17, welcher mit einem fest mit der Nockenwelle 5 verbundenen Geberrad 16 zusammenwirkt, sowie um einen Sensor 19, welcher ein Geberrad 18 abtastet, das fest mit der Kurbelwelle 15 verbunden ist und zugleich als Schwungrad fungiert.

Von den Sensoren 17, 19 gelieferte Signale werden mittels Signalleitungen 20, 21 einem Microcontroller 22 zugeführt, der der Ansteuereinheit 12 zuzurechnen ist. Weiter sind der Ansteuereinheit 12 Spannungssensoren 23, Stromsensoren 24, sowie ein Treiber 25 zuzurechnen. Eine insgesamt mit 27 bezeichnete leistungselektronische Schaltung der Ansteuereinheit 12 speist über Leitungen 26 elektrische Energie in Spulen des Stators 9 ein, wobei in Fig. 2 drei sternförmig geschaltete Impedanzen erkennbar sind. In nicht dargestellter Weise kann alternativ eine Dreieckschaltung gegeben sein.

Die Ansteuereinheit 12 ermöglicht eine Verstellung der Nockenwelle 5 bereits bei Stillstand des Verbrennungsmotors. Hierbei kommt zunächst ein impulsbasiertes Verfahren, insbesondere im Rahmen des als INFORM-Verfahrens bekannten Verfahrens, zum Einsatz. Bei höheren Drehzahlen erfolgt eine automatische Umstellung der durch die Ansteuereinheit 12 realisierten Ansteuerung des Elektromotors 2 auf das BEMF-Verfahren, welches auf der Auswertung einer in Wicklungen des Stators 9 des Elektromotors 2 induzierten elektromotorischen Kraft basiert.

### Bezugszeichenliste

- 1: Nockenwellenversteller
- 2: Elektromotor
- 3: Abtriebswelle
- 4: Antriebswelle
- 5: Nockenwelle
- 6: Verstellwelle
- 7: Antriebsrad
- 8: Rotor
- 9: Stator
- 10: Gehäuse
- 11: Getriebe
- 12: Ansteuereinheit
- 13: Montageplatte
- 14: Zugmittel
- 15: Kurbelwelle
- 16: Geberrad
- 17: Sensor
- 18: Geberrad
- 19: Sensor
- 20: Signalleitung
- 21: Signalleitung
- 22: Microcontroller
- 23: Spannungssensor
- 24: Stromsensor
- 25: Treiber
- 26: Leitung
- 27: leistungselektronische Schaltung

## Patentansprüche

1. Nockenwellenversteller (1), mit einem Elektromotor (2) und einem mit diesem zusammenwirkenden Getriebe (11), welches eine mit dem Rotor (8) des Elektromotors (2) gekoppelte Verstellwelle (6) sowie eine zur Kopplung mit einer Nockenwelle (5) vorgesehene Abtriebswelle (3) aufweist, wobei zur Ansteuerung des Elektromotors (2) eine - bezüglich dessen Rotorposition - sensorlose Ansteuereinheit (12) vorgesehen ist, welche außerhalb eines den Stator (9) des Elektromotors (2) umschließenden Gehäuses (10) des Elektromotors (2) angeordnet ist.

2. Nockenwellenversteller (1) nach Anspruch 1, **dadurch gekennzeichnet, dass** die Mittelachse des Elektromotors (2) gegenüber der Ansteuereinheit (12) versetzt ist, wobei die Ansteuereinheit (12) mittels einer eine Kühlfläche bildenden Montageplatte (13) mit dem Elektromotor (2) mechanisch verbunden ist.

3. Nockenwellenversteller (1) nach Anspruch 1 oder 2, **dadurch gekennzeichnet, dass** die Ansteuereinheit (12) zur Durchführung zweier verschiedener Betriebsmodi in unterschiedlichen Drehzahlbereichen des Elektromotors (2) ausgebildet ist.

4. Nockenwellenversteller (1) nach Anspruch 3, **dadurch gekennzeichnet, dass** als Betriebsmodi des Elektromotors (2) in einem unteren Drehzahlbereich ein impulsbasierter Modus und in einem oberen Drehzahlbereich ein gegenspannungsbasierter Modus (BEMF-Modus) vorgesehen sind.

5. Nockenwellenversteller (1) nach einem der Ansprüche 1 bis 4, **dadurch gekennzeichnet, dass** die Ansteuereinheit (12) mit Sensoren (17,19) gekoppelt ist, welche zur Erfassung der Drehzahl der Nockenwelle (5) sowie einer die Nockenwelle (5) antreibenden Kurbelwelle (15) ausgebildet sind.

6. Nockenwellenversteller (1) nach Anspruch 5, **dadurch gekennzeichnet, dass** die Sensoren (17,19) an demjenigen Ende der Nockenwelle (5) sowie der Kurbelwelle (15) angeordnet sind, welches der mit der Nockenwelle (5) mechanisch wirkverbundenen Seite der Kurbelwelle (15) abgewandt ist.

7. Nockenwellenversteller (1) nach einem der Ansprüche 1 bis 6, **dadurch gekennzeichnet, dass** der Elektromotor (2) als dreiphasiger elektronisch kommutierter Motor ausgebildet ist.

8. Nockenwellenversteller (1) nach einem der Ansprüche 1 bis 7, **dadurch gekennzeichnet, dass** als Getriebe (11) ein Dreiwellengetriebe, insbesondere Wellgetriebe, mit einer gehäusefesten Antriebswelle (4) vorgesehen ist.

9. Verfahren zum Betrieb eines zur Variation des Phasenverhältnisses zwischen Kurbelwelle (15) und Nockenwelle (5) eines Verbrennungsmotors vorgesehenen Nockenwellenverstellers (1), welcher einen sensorlos elektronisch kommutierenden Elektromotor (2) und ein durch diesen betätigtes Getriebe (11) umfasst, mit folgenden Merkmalen:
- Bei Stillstand des Verbrennungsmotors wird die Winkelrelation zwischen Stator (9) und Rotor (8) des Elektromotors (2) durch Bestromung des Stators (9) mit Stromimpulsen und Auswertung der Antwortsignale bestimmt,
- bis zu einer Drehzahlgrenze des Elektromotors (2) wird die Winkellage dessen Rotors (8) stromimpulsbasiert erfasst,
- die Kommutierung des Elektromotors (2) wird mit Überschreiten der Drehzahlgrenze auf einen gegenspannungsbasierten Modus (BEMF-Modus) umgestellt.

10. Verfahren nach Anspruch 9, **dadurch gekennzeichnet, dass** zur Ansteuerung des Elektromotors (2) Signale von Sensoren (17,19), welche außerhalb des Elektromotors (2) Winkelinformationen der Kurbelwelle (15) sowie der Nockenwelle (5) erfassen, verwendet werden.
